(19) Europäisches Patentamt
European Patent Office
Office européen des brevets

(11) **EP 2 307 850 B1**

(12) **EUROPÄISCHE PATENTSCHRIFT**

(45) Veröffentlichungstag und Bekanntmachung des Hinweises auf die Patenterteilung:
**21.03.2012 Patentblatt 2012/12**

(51) Int Cl.:
*G01B 7/14* (2006.01)     *B64C 1/12* (2006.01)
*G01N 27/24* (2006.01)

(21) Anmeldenummer: **09780411.6**

(22) Anmeldetag: **10.07.2009**

(86) Internationale Anmeldenummer:
**PCT/EP2009/058793**

(87) Internationale Veröffentlichungsnummer:
**WO 2010/004019 (14.01.2010 Gazette 2010/02)**

(54) **VERFAHREN ZUR DETEKTION EINER ABLOESUNG EINES VERSTEIFUNGSBAUELEMENTES**

METHOD FOR DETECTING THE SEPARATION OF A REINFORCING COMPONENT

PROCÉDÉ DE DÉTECTION D UN DÉTACHEMENT D UN ÉLÉMENT DE RENFORCEMENT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **11.07.2008 DE 102008040368**
**11.07.2008 US 134627 P**

(43) Veröffentlichungstag der Anmeldung:
**13.04.2011 Patentblatt 2011/15**

(73) Patentinhaber: **Airbus Operations GmbH**
**21129 Hamburg (DE)**

(72) Erfinder:
• **BACH, Martin**
**28199 Bremen (DE)**
• **BAULENAS, Marc**
**E-08550 Barcelona (ES)**

(74) Vertreter: **Charles, Glyndwr**
**Isarpatent**
**Postfach 44 01 51**
**80750 München (DE)**

(56) Entgegenhaltungen:
**WO-A-2007/002266     GB-A- 2 435 519**
**US-A- 5 245 293**

**Beschreibung**

Die Erfindung betrifft ein Verfahren zur Detektion einer Ablösung eines Versteifungsbauelementes, das an einem Rumpfhautbauelement eines Fahrzeugrumpfes befestigt ist.

Fahrzeuge werden zunehmend in Leichtbauweise hergestellt, wobei die dabei erreichte Gewichtseinsparung zu einer Minimierung des Kraftstoffverbrauchs führt.

Der Fahrzeugrumpf eines Flugzeuges kann aus mehreren Sektionen bestehen. Dabei besteht eine Sektion aus Strukturbauteilen bzw. Strukturbauelementen wie Spanten, Längsversteifungselementen und daran befestigten Rumpfhautbauelementen.

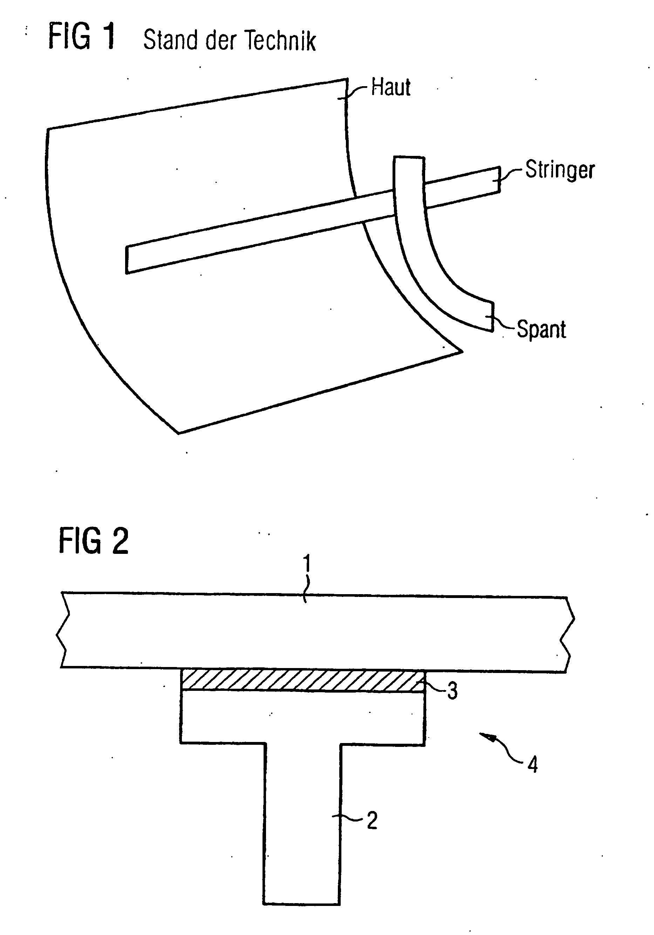

Fig. 1 zeigt prinzipiell den strukturellen Aufbau eines Fahrzeugrumpfes. In Längsrichtung des Fahrzeugs verlaufen Stabilisierungsstreben bzw. Stringer, die an quer zur Rumpflängsachse verlaufende Querspanten angebracht sind. Die Stabilisierungsstreben bzw. Stringerbauelemente sowie die Querspanten verleihen dem Fahrzeugrumpf eine stabile Querschnittsform. Die Rumpfhautbauelemente können mit den Versteifungsbauelementen, d.h. mit den Längsversteifungen und den Querspanten vernietet sein und eine sogenannten Schale bilden. Mehrere Schalen ergeben eine Sektion des Rumpfes, die auch als "Tonne" bezeichnet wird. In US-5 245 293 wird offenbart, wie mittels einer Kapazitätsmessung, eine feuchtigkeitsbedingte Änderung der strukturellen Festigkeit bestimmt wird.

Bei der Montage und im Betrieb des Fahrzeugs kann es unter Belastung zu einer teilweisen oder vollständigen Ablösung eines Versteifungsplanelementes von einem Rumpfhautbauelement kommen. Das Ablösen von Versteifungsbauelementen, insbesondere bei Flugzeugen ist sicherheitskritisch. Um abgelöste Rumpfhautbauelemente bzw. Versteifungsbauelemente zu erkennen werden daher nach Fertigung des Fahrzeugs im Zuge der Qualitätssicherung visuelle Überprüfungen der Fahrzeugsschale von außen vorgenommen. Diese Prüfungen sich sehr zeitaufwendig. Darüber hinaus kann auch eine visuelle Überprüfung von innen nach der Demontage von Innenverschalungsteilen erfolgen, wobei diese Überprüfungen noch zeitaufwendiger sind.

Es ist daher eine Aufgabe der vorliegenden Erfindung, ein Verfahren zu schaffen, das eine teilweise oder vollständige Ablösung eines Versteifungsbauelementes mit geringen Aufwand in kurzer zeit erfasst.

Die Erfindung schafft gemäß Anspruch 1 ein Verfahren zur Detektion einer Ablösung eines Versteifungsbauelementes, das an einem Rumpfhautbauelement eines Fahrzeugrumpfes eines Fahrzeuges angebracht ist, wobei das Rumpfhautbauelement und das Versteifungsbauelement zusammen mit einer dazwischen befindlichen Klebstoffschicht einen elektrischen Kondensator bilden, dessen Kapazität sich bei einer zumindest teilweise Ablösung des Versteifungsbauelementes von dem Rumpfhautbauelement verändert, wobei die Kapazität des Kondensators oder eine Änderung der Kapazität zur Detektion der Ablösung des Versteifungsbauelementes gemessen wird.

Bei einer Ausführungsform des erfindungsgemäßen Verfahrens wird an den Kondensator zur Messung seiner Kapazität ein Wechselspannungssignal mit einstellbarer Frequenz angelegt.

Bei einer Ausführungsform des erfindungsgemäßen Verfahrens wird entlang des Kondensators ein elektrischer Impuls geführt.

Bei einer Ausführungsform des erfindungsgemäßen Verfahrens wird die gemessene Kapazität des elektrischen Kondensators mit einer Sollkapazität verglichen.

Bei einer Ausführungsform des erfindungsgemäßen Verfahrens wird eine zumindest teilweise Ablösung des versteifungsbauelementes detektiert, wenn eine Abweichung zwischen der gemessenen Kapazität und einer Sollkapazität einen einstellbaren Toleranzschwellenwert überschreitet.

Bei einer Ausführungsform des erfindungsgemäßen Verfahrens wird eine zumindest teilweise Ablösung des Versteifungsbauelementes detektiert, wenn per Rückstreumessung eine Änderung der Kapazität detektiert wird.

Die Erfindung schafft ferner gemäß Anspruch 7 einen Fahrzeugrumpf mit Versteifungsbauelementen, die an Rumpfhautbauelementen angebracht sind, wobei die Rumpfhautbauelemente und die Versteifungsbauelemente zusammen mit dazwischen befindlichen Klebstoffschichten einen oder mehrere Kondensatoren bilden, deren Kapazitäten sich bei einer zumindest teilweisen Ablösung eines Versteifungsbauelementes von einem Rumpfhautbauelement verändern, wobei die Kapazitäten oder Änderungen der Kapazitäten der Kondensatoren zur Detektion einer Ablösung des Versteifungsbauelementes messbar sind.

Bei einer Ausführungsform des erfindungsgemäßen Fahrzeugsrumpfes bestehen die Versteifungsbauelemente und die Rumpfbauelemente aus Metall oder kohlefaserverstärktem Kunststoff (CFK).

Bei einer Ausführungsform des erfindungsgemäßen Fahrzeugrumpfes besteht die Klebstoffschicht aus einem dielektrischen Material.

Bei einer Ausführungsform des erfindungsgemäßen Fahrzeugsrumpfes wird zur Messung der Kapazitäten an das Versteifungsbauelement oder an das Rumpfhautbauelement ein von einem Generator erzeugtes elektrisches wechselspannungssignal mit einstellbarer Frequenz angelegt.

Bei einer Ausführungsform des erfindungsgemäßen Fahrzeugsrumpfes wird zur Detektion von Kapazitätsänderungen entlang des Versteifungsbauelements oder entlang des Rumpfhautbauelements ein von einem Generator erzeugten elektrischer Impuls geführt.

Bei einer Ausführungsform des erfindungsgemäßen Fahrzeugrumpfes ist das Versteifungsbauelement eine in Längsrichtung des Fahrzeugrumpfes verlaufende Stabilisierungsstrebe.

Bei einer Ausführungsform des erfindungsgemäßen Fahrzeugrumpfes handelt es sich um einen Fahrzeugrumpf eines Luftfahrzeugs.

Weitere bevorzugte Ausführungsformen des erfindungsgemäßen Verfahrens zur Detektion einer Ablösung eines Versteifungsbauelementes und des erfindungsgemäßen Fahrzeugrumpfes werden unter Bezugnahme auf die beigefügten Figuren zur Erläuterung erfindungswesentlicher Merkmale beschrieben.

Es zeigen:

Fig. 1    einen strukturellen Aufbau eines Fahrzeugrumpfes nach dem Stand der Technik;

Fig. 2    eine Schnittansicht einer Verbindungsstelle des Rumpfhautbauelementes mit einem Versteifungsbauelement bei einem Fahrzeugrumpf gemäß der Erfindung;

Fig. 3    eine beispielhafte Messanordnung zur Detektion einer Ablösung eines Rumpfhautbauelementes;

Fig. 4    ein beispielhaftes Signaldiagramm;

Fig. 5    eine erfindungsgemäße Messanordnung zur Detektion einer Ablösung eines Rumpfhautbauelementes ;

Fig. 6    ein erfindungsgemäßes Signaldiagramm.

Wie man aus Fig. 2 erkennen kann werden bei einem Fahrzeugrumpf ein Rumpfhautbauelement 1 an ein Versteifungsbauelement 2 angebracht, d.h. über eine Klebstoffschicht 3 verklebt. Die Klebstoffschicht 3 bildet eine dielektrische Schicht zwischen dem Rumpfhautbauelement 1 und dem Versteifungsbauelement 2. Neben der Klebstoffschicht können das Rumpfhautbauelement 1 und das Versteifungsbauelement 2 noch über zusätzliche Befestigungsmittel miteinander verbunden sein, beispielsweise über isolierte Nieten oder dergleichen. Bei einer möglichen Ausführungsform besteht die dielektrische Schicht 3 aus Epoxid-Klebstoff. Das Rumpfhautbauelement 1 und das Versteifungsbauelement 2 bilden zusammen mit der dazwischen befindlichen Klebstoffschicht 3 einen elektrischen Kondensator 4.

Die Kapazität C des Kondensators 4 ergibt sich gemäß folgender Gleichung:

$$C = \varepsilon_0 \cdot \varepsilon_r \cdot \frac{A}{d}$$

wobei $\varepsilon_0$ die Permetivität im Vakuum,
$\varepsilon_r$ die dielektrische Permetivität des Klebstoffmaterials,

A die Klebefläche und
d der Abstand zwischen dem Rumpfhautbauelement 1 und dem Versteifungsbauelement 2 bzw. die Dicke der Klebstoffschicht 3 ist.

Löst sich das Versteifungsbauelement 2 ganz oder teilweise von dem Rumpfhautbauelement 1 ab, ändert sich die Kapazität C des Kondensators 4. Die Kapazität C des Kondensators 4 wird zur Detektion einer teilweisen oder vollständigen Ablösung des Versteifungsbauelementes 2 von dem Rumpfhautbauelement 1 gemessen. Bei dem Versteifungsbauelement 2 handelt es sich beilspielsweise um eine Stabilisierungsstrebe, die in Längsrichtung oder in Querrichtung des Fahrzeugrumpfes verläuft. Bei dem Fahrzeug kann es sich um ein beliebiges Fahrzeug, beispielsweise um ein Kraftfahrzeug oder um ein Luftfahrzeug handeln.

Fig. 2 zeigt eine Verbindungsstelle zwischen einem Rumpfhautbauelement und einem Versteifungsbauelement 2. In einem Fahrzeugrumpf kann es für jedes Rumpfhautbauelement 1 auch mehrere Verbindungsstellen zu verschiedenen Versteifungsbauelementen 2 geben, wobei jeweils eine dielektrische Klebstoffschicht 3 zwischen dem Rumpfhautbauelement 1 und dem Versteifungsbauelement 2 liegt. Diese Verbindungsstellen bilden Kondensatoren C, die zueinander parallel verschaltet sind.

Das Rumpfhautbauelement 1 und das Versteifungsbauelement 2 bestehen aus Leichtbauwerkstoffen. Bei einer möglichen Ausführungsform besteht das Rumpfbauelement 1 und das Versteifungsbauelement 2 aus einem Faserverbundwerkstoff, insbesondere aus kohlefaserverstärkten Kunststoffen CFK. Bei einer alternativen Ausführungsform besteht das Rumpfhautbauelement 1 und das Versteifungsbauelement 2 aus einem metallischen Leichtbauwerkstoff, wie zum Beispiel Aluminium oder Titan.

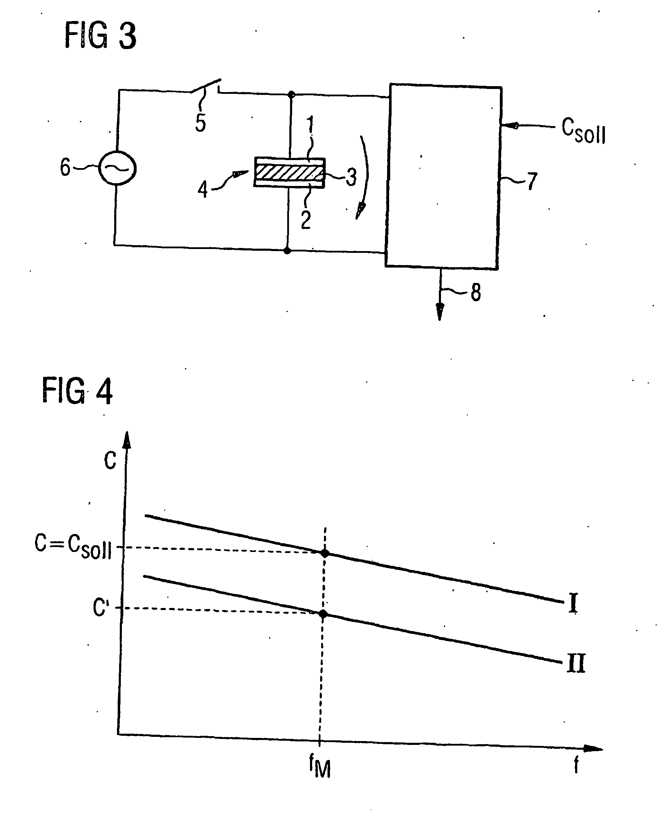

Fig. 3 zeigt eine beispielhafte Messanordnung zur Durchführung des erfindungsgemäßen Verfahrens zur Detektion einer Ablösung eines versteifungsbauelementes 2.

Das Rumpfhautbauelement 1 und das Versteifungsbauelement 2 bildet mit der dazwischenliegenden Klebstoffschicht 3 einen Kondensator 4, der über einen Schalter 5 an einen Generator 6 schaltbar ist, der ein elektrisches Wechselspannungssignal AC mit einstellbarer Frequenz f liefert. Eine Messeinrichtung 7 erfasst die an dem Kondensator 4 abfallende Spannung U und bestimmt daraus die Kapazität C des Kondensators 4. Bei der in Fig. 3 dargestellten Ausführungsform der Messanordnung wird die gemessene Kapazität C des elektrischen Kondensators 4 mit einer Sollkapazität $C_{soll}$ verglichen. Die Messeinrichtung 7 detektiert eine Ablösung des Versteifungsbauelementes 2 von dem Rumpfhautbauelement 1, wenn eine Abweichung $\Delta C$ zwischen der gemessenen Kapazität C des Kondensators 4 und der Sollkapazität $C_{SOLL}$ einen einstellbaren Toleranzschwellenwert überschreitet. In diesem Falle gibt die Messeinrichtung 7 ein Warnsignal über eine Leitung 8 ab. Anschließend kann eine visuelle Überprüfung des in Frage kommenden Rumpfhautbauelementes 1 durch Wartungspersonal erfolgen. Bei dem Wechselspannungsgenerator 6 kann es sich um einen internen Wechselspannungsgenerator des Fahrzeuges, beispielsweise des Flugzeuges handeln. Bei einer alternativen Ausführungsform wird ein externer Wechselspannungsgenerator 6 verwendet. Auch die Messeinrichtung 7 ist bei einer möglichen Ausführungsform innerhalb des Fahrzeugs, beispielsweise des Flugzeuges integriert.

Bei einer möglichen Ausführungsform wird die Sollkapazität $C_{SOLL}$ nach Fertigstellung des Fahrzeuges gemessen und in einem Speicher gespeichert. In regelmäßigen Zeitabständen wird dann geprüft, ob sich die Kapazität C des Kondensators 4 geändert hat oder nicht. Eine Veränderung der Kapazität C ist möglicherweise ein Hinweis auf ein sich teilweise ablösendes Rumpfhautbauelement 1.

Fig. 4 zeigt ein Diagramm zur Erläuterung des beispielhaften Detektionsverfahrens für die in Fig. 3 dargestellte Messanordnung. Die Kurve I zeigt die Frequenzabhängigkeit eines intakten Kondensators, d.h. des Kondensators 4, dessen Rumpfhautbauelement fest mit dem zugehörigen Versteifungsbauelement 2 verklebt ist. Mit zunehmender Frequenz f des angelegten Wechselspannungssignals sinkt die Kapazität. Bei einer Beschädigung des Kondensators 4 oder bei einem Ablösen des Versteifungsbauelementes 2 von dem zugehörigen Rumpfhautbauelement 1 sinkt die Kapazität C des Kondensators 4 wie mit Linie II in Fig. 2 dargestellt ist. Bei einer vorgegebenen Messfrequenz $f_M$ entspricht somit die Kapazität C des intakten Kondensators 4 der gemessenen und ggf. zwischengespeicherten Sollkapazität $C_{SOLL}$. Nach einer Beschädigung des Kondensators 4 sinkt dessen Kapazität C bei der Messfrequenz $f_M$ auf die Kapazität C'. Weicht die Kapazität C' von der ursprünglichen Kapazität C zu sehr ab, d.h. wird ein einstellbarer Toleranzschwellenwert überschritten, gibt die Messeinrichtung 7 ein Warnsignal ab und das entsprechende Rumpfhautbauelement 1 wird inspiziert.

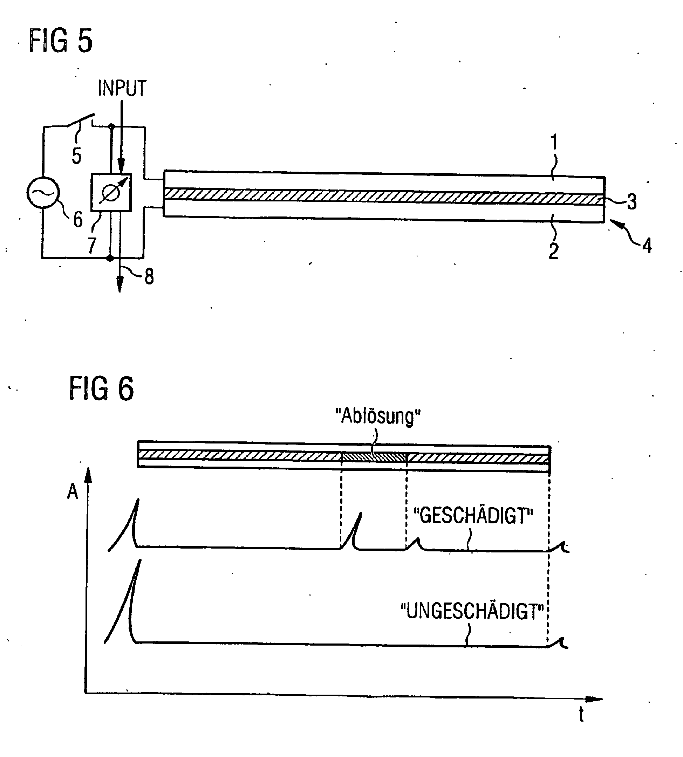

Fig. 5 zeigt die erfindungsgemäße Messanordnung zur Durchführung des erfindungsgemäßen Verfahrens. Dabei wird in eine der beiden Platten 1, 2 des oben beschriebenen Kondensators 4 mindestens ein von dem Signalgenerator 6 generierter Signal-Impuls eingespeist, während die jeweils andere Platte des Kondensators 4 als Erdung dient. An Ablösungen bzw. Ablösestellen, die eine Änderung der Kapazität des Kondensators 4 hervorrufen, wird dieser Signal-Impuls zumindest teilweise reflektiert. Ein Amplituden-Zeit-Diagramm zur Erläuterung dieser Rückstreumessung zeigt Fig. 6. Der obige Signalverlauf ergibt sich bei einer zumindest teilweisen Ablösung während der untere Signalverlauf ein unbeschädigtes bzw. nicht abgelöstes Rumpfhautbauelement widerspiegelt.

Mit dem erfindungsgemäßen Verfahren kann man neben der Detektion eine Ablösung des Versteifungsbauelementes 2 auch kontrollieren, ob die Klebstoffschicht 3 eine gewünschte Solldicke $d_{SOLL}$ aufweist.

Das erfindungsgemäße Verfahren ermöglicht eine schnelle Prüfung ohne aufwendige Demontage von Fahrzeugteilen. Durch das erfindungsgemäße Verfahren lässt sich das Ablösen eines Versteifungsbauelementes 2, d. h. z. B. eines Stringers bzw. von versteiften CFK-Strukturen in druckbeaufschlagten oder drucklosen Bereichen erfassen. Das erfindungsgemäße Verfahren kann im Zuge der Qualitätssicherung nach Fertigstellung des Fahrzeuges bzw. Flugzeuges durchgeführt werden. Ferner kann das erfindungsgemäße Verfahren bei Wartungsarbeiten durchgeführt werden. Bei einer möglichen Ausführungsform kann das erfindungsgemäße Verfahren auch während des Betriebes des Fahrzeuges ausgeführt werden. Bei dem Fahrzeug kann es sich um ein beliebiges in Leichtbauweise hergestelltes Fahrzeug handeln, beispielsweise ein Kraftfahrzeug, ein Luftfahrzeug, ein Schienenfahrzeug oder um ein Schifffahrzeug.

**Patentansprüche**

1. Verfahren zur Detektion einer Ablösung eines Versteifungsbauelementes (2), das an einem Rumpfhautbauelement (1) eines Fahrzeugrumpfes eines Fahrzeugs angebracht ist,
   wobei das Rumpfhautbauelement (1) und das Versteifungsbauelement (2) zusammen mit einer dazwischen befindlichen Klebstoffschicht (3) einen elektrischen Kondensator (4) bilden, dessen Kapazität (C) sich bei einer zumindest teilweisen Ablösung des Versteifungsbauelementes (2) von de Rumpfhautbauelement (1) verändert, wobei in das Rumpfhautbauelement (1) oder in das Versteifungsbauelement (2) mindestens ein durch einen Spannungsgenerator (6) generierter Signalimpuls eingespeist wird, der an Ablösestellen, die eine Änderung der Kapazität des Kondensators (4) hervorrufen, für eine Rückstreumessung zumindest teilweise reflektiert wird, und wobei die Rückstrenung gemessen wird.

2. Verfahren nach Anspruch 1,
   wobei die Rückstreumessung durch eine mit dem Rumpfhautbauelement (1) und dem Versteifungsbauelement (2) verbundene Messeinrichtung (7) erfolgt.

3. Verfahren nach Anspruch 2,
   wobei der Signalgenerator (6) und die Messeinrichtung (7) in dem Fahrzeug integriert sind und das Ablösen eines Versteifungsbauelementes (2) während des Betriebes des Fahrzeuges detektiert wird.

4. Verfahren nach Anspruch 1,
   wobei an den elektrischen Kondensator (4) zur Messung seiner Kapazität (C) ein von dem Signalgenerator (6) erzeugtes Wechselspannungssignal mit einstellbarer Frequenz (F) angelegt wird.

**5.** Verfahren nach Anspruch 4, wobei die gemessene Kapazität (C) des elektrischen Kondenstors (4) mit einer Soll-Kapazität ($C_{Soll}$) verglichen wird.

**6.** Verfahren nach Anspruch 5, wobei eine Ablösung des Versteifungsbauelementes (2) detektiert wird, wenn eine Abweichung zwischen der gemessenen Kapazität (C) und einer Sollkapazität ($C_{Soll}$) einen einstellbaren Toleranzschwellenwert überschreitet.

**7.** Fahrzeugrumpf eines Fahrzeuges mit Rumpfhautbauelementen (1), die an Versteifungsbauelementen (2) angebracht sind, wobei die Rumpfhautbauelemente (1) und die Versteifungsbauelemente (2) zusammen mit den dazwischen befindlichen Klebstoffschichten (3) einen oder mehrere elektrische Kondensatoren (4) bilden, deren Kapazitäten (C) sich bei einer Ablösung eines oder mehrerer Versteifungsbauelemente (2) von zugehörigen Rumpfhautbauelementen (1) verändern, wobei ein Spannungsgenerator (6) vorhanden ist, der im Gebrauch, mindestens einen Signalimpuls generiert, welcher in das Rumpfbauelement (1) oder in das Versteifungsbauelement (2) eingespeist wird, wobei der eingespeiste Signalimpuls an Ablösestellen, die eine Änderung der Kapazität des Kondensators (4) hervorrufen, für eine Rückstreumessung zumindest teilweise reflektiert wird, und wobei eine Messeinrichtung (7) für die Rückstrenmessung vorhanden ist.

**8.** Fahrzeugrumpf nach Anspruch 7, wobei der Signalgenerator (6) in dem Fahrzeug integriert ist.

**9.** Fahrzeugrumpf nach Anspruch 7 oder 8, wobei die Versteifungsbauelemente (2) und die Rumpfhautbauelemente (1) aus Metall oder kohlefaserverstärktem Kunststoff (CLK) bestehen.

**10.** Fahrzeugsrumpf nach Anspruch 7 bis 9, wobei die Klebstoffschicht (3) aus einem dielektrischen Material besteht.

**11.** Fahrzeugrumpf nach einem der Ansprüche 7 bis 10, wobei zur Messung der Kapazitäten (C) an das Versteifungsbauelement (2) oder an das Rumpfhautbauelement (1) ein von einem Generator (6) erzeugtes elektrisches Wechselspannungssignal mit einstellbarer Frequenz (f) anlegbar ist.

**12.** Fahrzeugrumpf nach einem der Ansprüche 7 bis 11, wobei das Versteifungsbauelement (2) eine in Längs- oder Querrichtung des Fahrzeugsrumpfes verlaufende Stabilisierungsstrebe ist.

**13.** Fahrzeugrumpf nach einem der Ansprüche 7 bis 12, wobei das Fahrzeug ein Luftfahrzeug ist.

**Claims**

**1.** Method for detecting detachment of a reinforcing component (2) that is attached to a body skin component (1) of a vehicle body of a vehicle, wherein the body skin component (1) and the reinforcing component (2) form an electric capacitor (4) together with an intermediate adhesive layer (3), said capacitor (4) having a capacitance (C) that changes if there is at least partial detachment of the reinforcing component (2) from the body skin component (1), wherein at least one signal pulse is applied to the body skin component (1) or the reinforcing component (2), wherein the signal pulse is generated by a signal generator (6) and wherein the signal pulse is at least partially reflected at points of detachment for backscatter measurement, wherein the points of detachment provoke a change of the capacitance (C) of the capacitor (4) and wherein the backscatter is measured.

**2.** Method according to claim 1, wherein the backscatter measurement is carried out by a measurement unit (7) that is coupled to the body skin component (1) and the reinforcing component (2).

**3.** Method according to claim 2, wherein the signal generator (6) and the measurement unit (7) are integrated in the vehicle and wherein the detachment of a reinforcing component (2) is detected during operation of said vehicle.

**4.** Method according to claim 1, wherein an AC voltage signal with adjustable frequency (F) which is generated by the signal generator (6) is applied to the electric capacitor (4) in order to measure its capacitance (C).

**5.** Method according to claim 4, wherein the measured capacitance (C) of the electric capacitor (4) is compared to a setpoint capacitance ($C_{Soll}$).

**6.** Method according to claim 5, wherein detachment of the reinforcing component (2) is detected if a deviation between the measured capacitance (C) and a setpoint capacitance ($C_{Soll}$) exceeds an adjustable tolerance threshold value.

**7.** Vehicle body of a vehicle comprising body skin components (1) that are attached to reinforcing components (2), wherein the body skin components (1) and the reinforcing components (2) form one or more electric capacitors (4) together with the intermediate adhesive layers (3), said capacitors (4) having capacitances (C) that change if one or more reinforcing components (2) become detached from respective body skin components (1)

wherein a signal generator (6) is provided that, when in use, generates at least one signal pulse, wherein the signal pulse is applied to the body skin component (1) or the reinforcing component (2), wherein the applied signal pulse is at least partially reflected at points of detachment for backscatter measurement, wherein the points of detachment provoke a change of the capacitance (C) of the capacitor (4) and wherein a measurement unit (7) is provided for the backscatter measurement.

8. Vehicle body according to claim 7, wherein the signal generator (6) is integrated in the vehicle.

9. Vehicle body according to claim 7 or 8, wherein the reinforcing components (2) and the body skin components (1) consist of metal or carbon fibre reinforced plastics material (CLK).

10. Vehicle body according to any one of claims 7 to 9, wherein the adhesive layer (3) consists of a dielectric material.

11. Vehicle body according to any one of claims 7 to 10, wherein an AC voltage signal with adjustable frequency (f) generated by a generator (6) can be applied to the reinforcing component (2) or to the body skin component (1) in order to measure the capacitances (C).

12. Vehicle body according to any one of claims 7 to 11, wherein the reinforcing component (2) is a stabilising strut extending in the longitudinal or transverse direction of the vehicle body.

13. Vehicle body according to any one of claims 7 to 12, wherein the vehicle is an aircraft.

**Revendications**

1. Procédé de détection d'un détachement d'un élément de renforcement (2) qui est appliqué à un élément de revêtement de fuselage (1) d'un fuselage de véhicule, l'élément de revêtement de fuselage (1) et l'élément de renforcement (2) formant ensemble avec une couche d'adhésif (3) se trouvant entre eux un condensateur électrique (4) dont la capacité (C) se modifie lorsque l'élément de renforcement (2) se détache au moins en partie de l'élément de revêtement de fuselage (1), au moins une impulsion de signal générée par un générateur de tension (6) étant introduite dans l'élément de revêtement de fuselage (1) ou dans l'élément de renforcement (2), qui se réfléchit au moins partiellement aux endroits de détachement, qui entraînent une modification de la capacité du condensateur (4), et la rétrodiffusion étant mesurée.

2. Procédé selon la revendication 1, la mesure de la rétrodiffusion étant effectuée par un dispositif de mesure (7) relié à l'élément de revêtement de fuselage (1) et à l'élément de renforcement (2).

3. Procédé selon la revendication 2, le générateur de signal (6) et le dispositif de mesure (7) étant intégrés dans le véhicule et le détachement d'un élément de renforcement (2) étant détecté pendant le service du véhicule.

4. Procédé selon la revendication 1, un signal de tension alternative produit par le générateur de signal (6) avec une fréquence réglable (F) étant appliqué au condensateur électrique (4) pour la mesure de sa capacité (C).

5. Procédé selon la revendication 4, la capacité mesurée (C) du condensateur électrique (4) étant comparée à une capacité de consigne ($C_{cons}$).

6. Procédé selon la revendication 5, un détachement de l'élément de renforcement (2) étant détecté quand un écart entre la capacité mesurée (C) et une capacité de consigne ($C_{cons}$) dépasse une valeur de du seuil de tolérance.

7. Fuselage de véhicule doté d'éléments de revêtement de fuselage (1), qui sont appliqués au niveau des éléments de renforcement (2), les éléments de revêtement de fuselage (1) et les éléments de renforcement (2) formant ensemble avec les couches d'adhésif (3) se trouvant entre eux un ou plusieurs condensateurs électriques (4) dont les capacités (C) se modifient lors d'un détachement d'un ou de plusieurs éléments de renforcement (2) d'éléments de revêtement de fuselage (1) associés, un générateur de tension (6) étant présent, qui génère en service au moins une impulsion de signal, qui est introduite dans l'élément de revêtement de fuselage (1) ou dans l'élément de renforcement (2), l'impulsion de signal introduite se réfléchissant au moins partiellement aux endroits de détachement, qui entraînent une modification de la capacité du condensateur (4) pour une mesure de la rétrodiffusion, et un dispositif de mesure (7) étant présent pour la mesure de la rétrodiffusion.

8. Fuselage de véhicule selon la revendication 7, le générateur de signal (6) étant intégré dans le véhicule.

9. Fuselage de véhicule selon la revendication 7 ou 8, les éléments de renforcement (2) et les éléments de revêtement de fuselage (1) étant constitués de métal ou de matière plastique renforcée de fibres de carbone (PRFC).

10. Fuselage de véhicule selon la revendication 7 à 9, la couche de colle (3) étant constituée d'un matériau diélectrique.

11. Fuselage de véhicule selon l'une des revendications 7 à 10, un signal de tension alternative électrique produit par un générateur (6) pouvant être appliqué à l'élément de renforcement (2) ou à l'élément de revêtement de fuselage (1) avec une fréquence réglable (F) pour la mesure des capacités (C).

12. Fuselage de véhicule selon l'une des revendications 7 à 11, l'élément de renforcement (2) étant une barre stabilisatrice s'étendant dans une direction longitudinale ou transversale du fuselage de véhicule.

13. Fuselage de véhicule selon l'une des revendications 7 à 12, le véhicule étant un aéronef.

## FIG 1  Stand der Technik

Haut

Stringer

Spant

## FIG 2

1

3

4

2

# FIG 3

# FIG 4

FIG 5

INPUT

5

6

7

8

1

3

2

4

FIG 6

"Ablösung"

A

"GESCHÄDIGT"

"UNGESCHÄDIGT"

t

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5245293 A